# EUROPÄISCHE PATENTSCHRIFT

(11) **EP 1 660 705 B1**
(45) Veröffentlichungstag und Bekanntmachung des Hinweises auf die Patenterteilung: **10.11.2010**
(21) Anmeldenummer: 04761020.9
(22) Anmeldetag: 01.09.2004
(51) Int. Cl.: D01F 2/10, B01J 39/22, B01J 41/16

(54) **VERFAHREN ZUR HERSTELLUNG CELLULOSISCHER FORMKÖRPER**
METHOD FOR PRODUCING CELLULOSE SHAPED BODIES
PROCEDE DE PRODUCTION DE CORPS FACONNES CELLULOSIQUES

(30) Priorität: 05.09.2003 AT 14022003
(43) Veröffentlichungstag der Anmeldung: 31.05.2006
(73) Patentinhaber: LENZING AKTIENGESELLSCHAFT, 4860 Lenzing (AT)
(72) Erfinder: SCHMIDTBAUER, Josef, A-4840 Vöcklabruck (AT); SCHOBESBERGER, Harald, A-4694 Ohlsdorf (AT)
(74) Vertreter: Nemec, Harald
(86) Internationale Anmeldenummer: PCT/AT2004/000297
(87) Internationale Veröffentlichungsnummer: WO 2005/024103

(56) Entgegenhaltungen:
- EP-A- 0 697 475
- PATENT ABSTRACTS OF JAPAN Bd. 1998, Nr. 09, 31. Juli 1998 (1998-07-31) & JP 10 110325 A (KOHJIN CO LTD), 28. April 1998 (1998-04-28)
- PATENT ABSTRACTS OF JAPAN Bd. 0152, Nr. 02 (C-0834), 23. Mai 1991 (1991-05-23) & JP 3 054234 A (DAIWABOU KURIEITO KK; others: 02), 8. März 1991 (1991-03-08) in der Anmeldung erwähnt
- PATENT ABSTRACTS OF JAPAN Bd. 0150, Nr. 38 (C-0800), 30. Januar 1991 (1991-01-30) & JP 2 274738 A (IPPOSHA OIL IND CO LTD), 8. November 1990 (1990-11-08)

## Beschreibung

Die Erfindung betrifft ein Verfahren zur Herstellung cellulosischer Formkörper nach dem Viskoseverfahren.

Die Herstellung von Formkörpern nach dem Viskoseverfahren, insbesondere Viskosefasern, wird seit vielen Jahrzehnten in kommerziellem Umfang durchgeführt und umfasst die folgenden Schritte:
- Alkalisieren eines Celluloseausgangsmaterials, wie z.B. Zellstoff
- Umsetzen des alkalisierten Celluloseausgangsmaterials ("Alkalicellulose") zu Cellulosexanthogenat
- Lösen des Cellulosexanthogenates mit Alkali. Die dabei erhaltene Lösung heißt "Viskose"
- Verspinnen der Viskose zu Formkörpern in einem oder mehreren Regenerationsbädern
- Regenerierung der Cellulose aus den Formkörpern und Nachbehandlung der erhaltenen Formkörper

Zu den Schritten der Nachbehandlung zählen beispielsweise Wäsche, Trocknen und im Fall von Viskosefasern z.B. die Avivage sowie - zur Herstellung von Stapelfasern - das Schneiden der Fasern.

Das Viskoseverfahren dient insbesondere zur Herstellung von Fasern (Stapelfasern und Filamentfasern) und Folien, aber auch zur Herstellung anderer Produkte, wie z.B. Schwämmen oder Cellulosepartikeln.

Viskosefasern werden in zwei Gruppen eingeteilt: Die sogenannten "Standardviskosefasern" und sogenannte "Modalfasern", bei welchen durch spezielle Maßnahmen beim Herstellen der Viskose und beim Spinnen höhere Festigkeiten und höhere Naßmodule erzielt werden. Die beiden Gruppen sind durch die BISFA (The International Bureau for the Standardisation of Man Made Fibres) als Gattungsbegriffe klassifiziert (in dieser Klassifikation werden Standardviskosefasern als "Viskose" bezeichnet. Für die Zwecke der besseren Unterscheidung zu dem auch für die Spinnlösung verwendeten Begriff "Viskose" wird in der vorliegenden Anmeldung der Begriff "Standardviskosefaser" verwendet).

Es ist bekannt, nach dem Viskoseverfahren hergestellte Formkörper, insbesondere Fasern, mit gewissen funktionellen Gruppen zu modifizieren, um so beispielsweise die Anfärbbarkeit der Formkörper oder deren Absorptionsfähigkeit zu verbessern.

In diesem Zusammenhang ist es auch bekannt, nach dem Viskoseverfahren hergestellte Formkörper mit Materialien mit ionenaustauschenden Eigenschaften zu modifizieren. Dadurch erhält man Formkörper, die selbst ionenaustauschende Eigenschaften aufweisen. Solche Formkörper, insbesondere in Form von Fasern, sind für zahlreiche Anwendungsbereiche besser geeignet als herkömmliche Ionenaustauschermaterialien.

Die Modifikation der Formkörper kann dadurch erreicht werden, dass die funktionellen Gruppen auf den bereits extrudierten Formkörper (z.B. durch Pfropfung) aufgebracht werden. Ein anderer Weg besteht in der Zugabe der funktionellen Gruppen zur Spinnlösung oder zu einem Vorläufer der Spinnlösung, z.B. zum eingesetzten Zellstoff oder zur alkalisierten Cellulose vor Umsetzung zum Cellulosexanthogenat.

Die WO 96/37641 beschreibt ein Verfahren zur Herstellung einer Viskosefaser, wobei unter anderem der Viskosemasse oder Alkalicellulose eine polymere Styrolsulfonsäure zugesetzt wird.

Aus der JP-A 61-146810 ist bekannt, Viskosefasern herzustellen, indem Lösungen von Polystyrol-Sulfonaten bzw. Polystyrol-Carboxylaten sowie deren Salze einer Viskose beigemischt werden und darauf Fasern gesponnen werden. Das Ziel des Verfahrens ist die Herstellung von Fasern mit verbesserter Anfärbbarkeit mit kationischen Farbstoffen.

Die JP-A 3-54234 offenbart die Herstellung von regenerierter Cellulose mit Anteilen von ionischen polymeren Verbindungen. Diese Verbindungen werden der Viskose zugemischt. Die hergestellten Formkörper weisen ionenaustauschende und auch antimikrobielle Eigenschaften auf.

Aus der GB-A 910,202 ist ein Verfahren zur Herstellung einer Membran bzw. einer Folie nach dem Viskoseverfahren bekannt, in welchem ebenfalls Materialien mit ionenaustauschenden Eigenschaften eingesetzt werden.

Aus der DE-A 199 17 614 ist ein Verfahren zur Herstellung von cellulosischen Formkörpern nach dem Aminoxidverfahren bekannt, wobei Ionenaustauscherteilchen einer Lösung von Cellulose in einem Aminoxid zugegeben werden. Das Aminoxidverfahren unterscheidet sich in technologischer Hinsicht deutlich vom Viskoseverfahren.

In den hinsichtlich des Viskoseverfahrens bekannten Dokumenten, bei welchen Material mit ionenaustauschenden Eigenschaften der Viskose und/oder einem Vorläufer davon zugegeben wird, wird das Material immer in Form einer Lösung zugegeben.

Es hat sich gezeigt, dass die aus dem Stand der Technik bekannten Verfahren zur Modifizierung von Formkörpern insbesondere hinsichtlich ihrer Einspinnausbeute zu wünschen übrig lassen, weil Polymerlösungen aufgrund ihrer Konsistenz nicht quantitativ in der Cellulosematrix eingebettet werden können. Unvollständig eingebettete Komponenten verursachen unerwünschte Anreicherungen im Verfahrenskreislauf und müssen aufwendig entfernt werden.

Die vorliegende Erfindung stellt sich zur Aufgabe, ein verbessertes Verfahren zur Herstellung solcher Formkörper sowie verbesserte Formkörper mit kationenaustauschenden Eigenschaften zur Verfügung zu stellen.

Diese Aufgabe wird durch ein Verfahren zur Herstellung cellulosischer Formkörper nach dem Viskoseverfahren, welche Formkörper ein Material mit kationenaustauschenden Eigenschaften enthalten, wobei das Material mit kationenaustauschenden Eigenschaften der Spinnlösung und/oder einem Vorläufer davon zugegeben wird, gelöst, welches Verfahren dadurch gekennzeichnet ist, dass das Material funktionelle Gruppen, ausgewählt aus Sulfonsäure-, Carbonsäure-, Phosphonsäure. Aminophosphonsäure-, Iminodiessissäure-, Thioharnstoff-, Thiol-, chelatbildenden und/oder amphoteren Gruppen, aufweist und in Form einer Dispersion von Partikeln mit einer maximalen Korngröße von 20 µm oder weniger zugegeben wird.

Bevorzugt wird das Material mit kationenaustauschenden Eigenschaften in Form einer wässerigen Dispersion zugegeben.

Es hat sich gezeigt, dass das Zumischen einer Dispersion zur Viskose bzw. einem Vorläufer davon, im Unterschied zum Zumischen einer Lösung, wie aus dem Stand der Technik bekannt, zu bei weitem höheren Einspinnausbeuten von 99 % und mehr führt. Solche Einspinnausbeuten wären beim Einsatz von flüssigen Polymeren oder Lösungen nicht erreichbar.

Wichtig ist dabei, dass die maximale Korngröße der in der Dispersion vorliegenden Partikel gering ist, insbesondere 20 µm nicht überschreitet. Bevorzugt weisen die Partikel eine maximale Korngröße von 7 µm oder weniger auf.

Für die Zwecke der vorliegenden Erfindung und der Patentansprüche bedeutet dabei der Begriff "maximale Korngröße", dass 99% der Partikel in der Dispersion maximal die jeweils angegebene Korngröße aufweisen.

Als Spinnlösung eignen sich übliche, zur Herstellung von Formkörpern verwendbare Viskosen, insbesondere solche zur Herstellung von Standardviskosefasern oder Modalfasem. Die Herstellung der Formkörper aus der Spinnlösung sowie die Nachbehandlung der Formkörper erfolgt nach üblichen, dem Fachmann an sich bekannten Methoden.

Bevorzugt werden mit dem erfindungsgemäßen Verfahren Fasern in Form von Stapelfasern oder (endlosen) Filamentfasern, aber auch Folien, Schwämme und Cellulosepartikel hergestellt. Es können Standardviskosefasern oder Modalfasern hergestellt werden.

Wird als Material mit kationenaustauschenden Eigenschaften ein Material mit stark sauren kationenaustauschenden Eigenschaften eingesetzt, so eignet sich als funktionelle Gruppe die Sulfonsäuregruppe.

Wird ein Material mit schwach sauren kationenaustauschenden Eigenschaften eingesetzt, so eignen sich als funktionelle Gruppen Carbonsäure-, Phosphonsäure-, Methacrylsäure-, Iminodiessigsäure-, Thioharnstoff- und Thiolgruppen sowie weitere chelatbildende Gruppen.

Auch Materialien mit amphoteren Gruppen sind zum Einsatz im erfindungsgemäßen Verfahren geeignet.

Eine bevorzugte Ausführungsform des erfindungsgemäßen Verfahrens darin, dass man den das Material mit Kationenaustauschenden Eigenschaften enthaltenden Formkörper mit einem Metallion, bevorzugt ausgewählt aus der Gruppe, bestehend aus Silber-, Blei-, Kupfer-, Zink- und Quecksilberionen, behandelt.

Die Metallionen werden dabei an die aktiven Gruppen des Materials mit kationenaustauschenden Eigenschaften gebunden. Damit können dem Formkörper beispielsweise antibakterielle Eigenschaften verliehen werden.

In einer besonders bevorzugten Ausführungsform dieser Variante des erfindungsgemäßen Verfahrens werden die funktionellen Gruppen des Materials zumindest teilweise vor dem Verspinnen und/oder im Regenerationsbad in die Zink-Form übergeführt.

Einerseits wird durch ein Überführen in die Zink-Form vor dem Verspinnen verhindert, dass die im Regenerationsbad vorhandenen und für die Regeneration notwendigen Zn-Ionen durch Ionenaustauschereffekte vom extrudierten Formkörper aufgenommen werden.

Umgekehrt kann man bewusst die kationenaustauschereffekte des extrudierten Formkörpers dahingehend nutzen, dass man die Formkörper im Regenerationsbad Zink-Ionen an sich binden lässt. Zink-Ionen wirken im fertigen Formkörper antibakteriell.

Das Material mit kationenaustauschenden Eigenschaften weist bevorzugt in an sich bekannter Weise eine Matrix (auf welcher sich die funktionellen Gruppen befinden) auf, die aus vernetztem Polystyrol oder Copolymeren aus Polystyrol und Methacrylsäure, Polyacrylat, Polyacrylamid, Phenol/Formaldehyd und/oder Cellulose ausgewählt ist.

In Summe können an sich übliche, kommerziell erhältliche Ionenaustauscherharze ausgewählt aus der Gruppe
- stark saure Kationenaustauscher
- schwach saure Kationenaustauscher
- spezifische oder Chelat-Ionenaustauscher
- sowie sämtliche Kombinationen daraus
im erfindungsgemäßen Verfahren eingesetzt werden.

Das Material mit ionenaustauschenden Eigenschaften kann dabei in einer Menge von 0,1 bis 100 Gew.%, bevorzugt 10 bis 70 Gew.%, besonders bevorzugt 10 bis 50 Gew.%, bezogen auf Cellulose und auf Basis der trockenen Aktivsubstanz, eingesetzt werden.

Die eingesetzte Dispersion kann eine Konzentration an Material mit kationenaustauschenden Eigenschaften von 1 % bis 60 Gew.%, bevorzugt 20 bis 50 Gew.%, wiederum auf Basis der trockenen Aktivsubstanz, aufweisen.

Die vorliegende Erfindung betrifft auch einen cellulosischen Formkörper, der durch das erfindungsgemäße Verfahren erhältlich ist. Bevorzugt liegt der erfindungsgemäße Formkörper in Form einer Faser, einer Folie, eines Schwammes und/oder eines Partikels vor.

Die erfindungsgemäßen Formkörper weisen gegenüber an sich bekannten Kationenaustauschermaterialien zahlreiche Vorteile auf:
- Es zeigt sich nämlich, dass die abzuscheidenden Ionen offenbar in die Cellulosematrix des Formkörpers eindringen können und dort von den Harzpartikeln adsobiert werden. Damit kann bei Verwendung der erfindungsgemäßen Formkörper eine Kombination zweier Wirkprinzipien, nämlich sowohl des Ionenaustausches als auch der Feststoffabscheidung, erzielt werden.
- Es wird eine günstigere Ionenaustauschkinetik beobachtet, wodurch verdünnte Lösungen effizienter behandelt werden können.
- Die Kapazität kann gegenüber herkömmlichen Ionenaustauschern auf Harzbasis um bis zu 40% besser ausgenützt werden.
- Es werden höhere Durchsatzraten erzielt.
- Die erfindungsgemäßen Formkörper sind druckbeständig, kompakt und leicht regenerierbar.
- Es wird ein geringerer Chemikalienverbrauch erzielt.
- Die erfindungsgemäßen Formkörper können umweltfreundlich entsorgt werden.
- In der bevorzugten Ausfiihrungsform, gemäß welcher die Formkörper gebundene Metall-Ionen, insbesondere Zink-Ionen aufweisen, haben die Formkörper weitere günstige, beispielsweise antibakterielle Eigenschaften.

Weiters betrifft die vorliegende Erfindung eine Fasermischung, welche einen erfindungsgemäßen cellulosischen Formkörper in Form einer cellulosischen Faser enthält.

Die erfindungsgemäße cellulosische Faser kann dabei mit Natur- und Chemiefasern, insbesondere mit Baumwolle, Viskose, Modal, Lyocell, Polyester und/oder Polyamid, in System- oder Intimmischungen gemischt werden. Der Anteil an erfindungsgemäßer Faser in der Mischung kann von 1 % bis 99 %, bevorzugt 20 % bis 70 % betragen.

Ein weiterer Aspekt der vorliegenden Erfindung ist ein textiler Artikel, insbesondere ein Garn, Gewebe, Gestrick und/oder Vliesstoff, welcher die erfindungsgemäße cellulosische Faser oder eine erfindungsgemäße Fasermischung enthält.

Erfindungsgemäße Vliesstoffe können beispielsweise nach den an sich bekannten Verfahren der Vernadelung, Thermobondierung, Wasserstrahlverfestigung und/oder der chemischen Verfestigung hergestellt werden.

Die vorliegende Erfindung betrifft auch die Verwendung des erfindungsgemäßen cellulosischen Formkörpers, der erfindungsgemäßen Fasermischung und/oder des erfindungsgemäßen textilen Artikels in Flüssigkeitsfiltern, zur Abwasserreinigung und zum Reinigen von Lösungen, zur Abscheidung von Schwermetallen, zur Entsalzung, in Luftfiltern mit antibakteriellen Eigenschaften, als antibakterielles Material, insbesondere als Ausgangsmaterial für medizinische Textilien, für analytische Zwecke, insbesondere als Substrat für präparative und katalytische Anwendungen in der Analytik, beispielsweise in einer chromatographischen Separierung, und/oder für Produkte mit antibakteriellen Eigenschaften, insbesondere für Unterwäsche, Sportbekleidung, Socken, Krankenhaustextilien, Bettwäsche, Haushaltstücher, Frotteewaren und Hygienevliesstoffe.

Wichtig ist, wie oben erwähnt, dass die Korngröße des Materials mit ionenaustauschenden Eigenschaften in der Dispersion genügend klein ist.

Es müssen daher handelsübliche kationenaustauschen, die in der Regel in Form von Harzkugeln mit einer Korngröße von 0,4 - 1,5 mm vorliegen, zu einer feinen Dispersion verarbeitet werden. Dazu muß eine Mahlung des Materials in Wasser mit speziellen Feinmühlen durchgeführt werden, wobei es notwendig sein kann, die Kugeln vorzuzerkleinern.

Die Mahlung findet bevorzugt in einer Rührwerksperlmühle statt, deren Perlen aus ZrO₂ bestehen und eine Größe von typischerweise 1,1 bis 1,4 mm oder von 0,7 bis 0,9 mm aufweisen. Die Wahl der geeigneten Perlengröße ist dem Fachmann jederzeit möglich. Sie hängt einerseits von der Partikelgröße des ungemahlenen Produktes ab; andererseits kann man mit zu großen Mahlkugeln keine feinen Partikelgrößen in der Dispersion erzeugen.

Die Rührwerksperlmühle kann in Kreislauffahrweise betrieben werden. Zuvor kann eine Vorzerkleinerung z.B. mittels Ultra-Turrax oder einer Zahnkolloidmühle stattfinden.

Die resultierende Dispersion wird in an sich bekannter Weise mit Dispergatoren und Verdickern stabilisiert. Als Dispergatoren und Verdicker haben sich insbesondere Polyphosphate, Polyacrylsäurederivate oder Alkylenoxidpolymere und als Verdicker Xanthan-Kautschuk als geeignet erwiesen.

Bevorzugte Produkte sind z.B.
Calgon N (Polyphosphat), Hersteller: Fa. BK Giulini Chemie
Lopon 890 (Na-Polyacrylat), Hersteller: Fa. BK Giulini Chemie
Hydropalat 890 (Alkylenoxidpolymer), Hersteller: Fa. Henkel/Cognis
Deuteron VT819 (Xanthan-Kautschuk), Hersteller: Fa. Henkel/Cognis

Die Zugabe der Dispersion zur Spinnlösung kann entweder durch Einrühren der Dispersion mit einem Rührwerk in die Viskose oder durch kontinuierliches Zudosieren und Homogenisieren der Dispersion in die Zuleitung zur sogenannten "Spinnpfeife", mit welcher die Spinnlösung dem Formgebungswerkzeug, z.B. der Düse, zugeführt wird, erfolgen. Für die Filtration der Viskose genügt ein übliches Kunststofffilter mit 20 µm Maschenweite.

Im Fall der Herstellung von Fasern können die eingesetzten Düsen einen etwas größeren Lochdurchmesser aufweisen als bei der Herstellung unmodifizierter Fasern. Sind die Harze fein genug gemahlen (beispielsweise kleiner 5 µm), muss der Lochdurchmesser aber in der Regel nicht größer gewählt werden. Im übrigen können die zur Herstellung unmodifizierter Fasern üblichen Produktionsparameter (wie z.B. die Zusammensetzung der Regenerationsbäder) herangezogen werden.

Die Erfindung wird im folgenden anhand von Ausführungsbeispielen näher erläutert, wobei diese Beispiele jedoch keinesfalls als einschränkend anzusehen sind.

### Beispiele

### Beispiel 1:

Das Ionenaustauscherharz Lewatit MP S 100 (stark saurer Kationenaustauscher mit Sulfonsäuregruppen in Na⁺-Form auf Polystyrolbasis, gelförmig, Größe der Ausgangsperlen: ca. 600 µm) wird zu gleichen Gewichtsanteilen in Wasser dispergiert und mit Hilfe einer Kolloidmühle vorzerkleinert. Das eingesetzte Wasser enthält bereits Netz- und Dispergiermittel (0,1% Calgon N, 0,3% Lopon 890). Es entsteht eine 24%ige Suspension, die mittels einer Perlmühle (Größe der Mahlkugeln: 1,1 bis 1,4 mm) unter Zusatz weiterer Additive (0,1% Deuteron VT819, 0,3% Hydropalat 1080) im Kreislaufbetrieb zu einer feinen Dispersion gemahlen wird. Die maximale Korngröße der Dispersion beträgt 4,9 µm.

Diese Dispersion wird mit einer 8,65%igen wässerigen, zur Herstellung von Standardviskosefasern verwendeten Viskoselösung im Gewichtsverhältnis Dispersion:Viskose = 1:6 gemischt. Damit wird ein Harzanteil in der Faser von 31 Gew.% erreicht. Die Mischung wird aus Düsen mit einem Durchmesser von 80 µm in ein Spinnbad gesponnen. Das Spinnbad enthält etwa 100 g/l H₂SO₄, 350 g/l Na₂SO₄, und 17 g/l ZnSO₄ bei 48°C. Zur Erzielung einer entsprechenden Faserfestigkeit erfolgt eine Verstreckung im Zweitbad (92°C, 15 g/l H₂SO₄) von ca. 75%. Die Abzugsgeschwindigkeit beträgt 50 m/min.

Die erhaltenen Filamente werden in Stapel zu 40 mm geschnitten, in konventioneller Weise mit Sauerwasser behandelt, entschwefelt, nach Bedarf gebleicht, gewaschen und aviviert. Die Trocknung erfolgt bei 70°C.

Die erhaltenen Fasern haben einen Titer von 4,4 dtex und eine Trockenfestigkeit von 12 cN/tex bei einer Dehnung von 24 %.

Die Gesamtkapazität der Fasern wurde gemäß DIN 54403 mit 2,2 mequ/g Fasern bestimmt.

### Beispiel 2:

Es wird wie im Beispiel 1 vorgegangen, die Dispersion wird jedoch in eine 6%ige, zur Herstellung von Modalfasern verwendete Viskose im Gewichtsverhältnis Dispersion:Viskose = 1:8,7 eingerührt. Damit wird ebenfalls ein Harzanteil in der Faser von 31 Gew.% erreicht.

Die Mischung wird aus Düsen mit einem Durchmesser von 80 µm in ein Spinnbad gesponnen. Das Spinnbad enthält etwa 80 g/l H₂SO₄, 115 g/l Na₂SO₄, und 60 g/l ZnSO₄ bei 40°C. Zur Erzielung einer entsprechenden Faserfestigkeit erfolgt eine Zweitbadverstreckung (92°C, 15 g/l H₂SO₄) von ca. 114 %. Die Abzugsgeschwindigkeit beträgt 25 m/min.

Die erhaltenen Filamente werden in Stapel zu 40 mm geschnitten, mit Sauerwasser behandelt, entschwefelt, nach Bedarf gebleicht, gewaschen und aviviert. Die Trocknung erfolgt bei 70°C.

Die erhaltenen Fasern haben einen Titer von 3,6 dtex und eine Trockenfestigkeit von 19 cN/tex bei einer Dehnung von 17 %.

Die Gesamtkapazität der Fasern gemäß DIN 54403 wurde mit 2,1 mequ/g Fasern bestimmt.

### Beispiel 3:

Die Herstellung der Viskosefasern erfolgt wie im Beispiel 1 beschrieben. Die maximale Korngröße der verwendeten Dispersion beträgt allerdings 7 µm, die Verstreckung der Kabel erfolgt mit 55%.

Die erhaltenen Fasern haben einen Titer von 2,9 dtex, eine Trockenfestigkeit von 9 cN/tex bei einer Dehnung von 13 %.

Die Gesamtkapazität der Fasern wurde mit 1,35 mequ/g Fasern bestimmt.

Aufgrund der Ionenaustauschereigenschaft wird das für die Produktion von Viskosefasern notwendige, im Spinnbad vorliegende Zink zum Teil an die Faser gebunden. Gemessen wurde eine Zinkkonzentration auf der Faser von 2770 ppm.

Das gebundene Zink bewirkt eine antimikrobielle Wirkung. Bestimmt wurde eine bakteriostatische sowie bakterizide Wirksamkeit gegen *Staphylococcus aureus* und *Klebsiella pneumoniae* (JIS L 1902: Testing Method for antibacterial of textiles, 1998).

### Beispiel 4:

Anstelle des unter Beispiel 1 zitierten Ionenaustauscherharzes wurde das Ionenaustauscherharz Lewatit TP 208 (schwach saurer Chelationenaustauscher mit Methyleniminodiessigsäuregruppen in Na⁺-Form auf Polystyrolbasis, Größe der Ausgangsperlen: ca. 700 µm) eingesetzt.

Das Harz wird zu gleichen Gewichtsanteilen in Wasser dispergiert und mithilfe eines Ultra-Turrax vorzerkleinert. Das Wasser enthält bereits Netz- und Dispergiermittel (0,1% Calgon N, 0,3% Lopol 890). Es ensteht eine 20%ige Suspension, die mittels einer Perlmühle (Größe der Mahlkugeln: 1,1 bis 1,4 mm) im Kreislaufbetrieb zu einer feinen Dispersion gemahlen wird. Die maximale Korngröße der Dispersion beträgt 7,7 µm.

Diese Dispersion wird mit einer 6%igen, zur Herstellung von Modalfasern verwendeten Viskose im Gewichtsverhältnis Dispersion:Viskose = 1:12 gemischt. Damit wird ein Harzanteil in der Faser von 22 Gew.% erreicht. Die Mischung wird aus Düsen mit einem Durchmesser von 90 µm in ein Spinnbad gesponnen. Das Spinnbad enthält etwa 80 g/l H₂SO₄, 115 g/l Na₂SO₄, und 60 g/l ZnSO₄ bei 40°C. Zur Erzielung einer entsprechenden Faserfestigkeit erfolgt eine Verstreckung im Zweitbad (92°C, 15 g/l H₂SO₄) von ca. 99%. Die Abzugsgeschwindigkeit beträgt 25 m/min.

Die erhaltenen Filamente werden in Stapel zu 40 mm geschnitten, mit Sauerwasser behandelt, entschwefelt, bei Bedarf gebleicht, gewaschen und aviviert. Die Trocknung erfolgt bei 70°C.

Die erhaltenen Fasern haben einen Titer von 2,3 dtex, eine Trockenfestigkeit von 21 cN/tex bei einer Dehnung von 14 %.

Die Gesamtkapazität der Fasern wurde gemäß DIN 54403 mit 1,35 mequ/g Fasern bestimmt.

### Beispiel 5 (nacht erfindungsgemäß):

Das Anionenaustauscherharz Lewatit MP 500 (makroporöser stark basischer Anionenaustauscher mit quartären Ammoniumgruppen in Cl⁻-Form auf Polystyrolbasis, Größe der Ausgangsperlen: ca. 600 µm) wird zunächst mit verdünnter Viskose vorbehandelt, abfiltriert und anschließend zu gleichen Gewichtsanteilen in Wasser dispergiert. Das eingesetzte Wasser enthält bereits Netz- und Dispergiermittel (0,1 % Calgon N, 0,3% Lopol 890). Die Vorzerkleinerung erfolgt mithilfe eines Ultra-Turrax. Es ensteht eine 18%ige Suspension, die mittels einer Perlmühle (Größe der Mahlkugeln: 1,1 bis 1,4 mm) unter Zusatz weiterer Additive (0,1% Deuteron VT819, 0,3% Hydropalat 1080) im Kreislaufbetrieb zu einer feinen Dispersion gemahlen wird. Die maximale Korngröße der Dispersion beträgt 9 µm.

Diese Dispersion mit einem Feststoffanteil von 18% wird mit einer 8,65%igen wässerigen Viskoselösung (Viskose für Standardviskosefasern) im Gewichtsverhältnis Dispersion:Viskose = 1:33 gemischt. Damit wird ein Harzanteil in der Faser von 5,9 Gew.% erreicht. Die Mischung wird aus Düsen mit einem Durchmesser von 90 µm in ein Spinnbad gesponnen. Das Spinnbad enthält etwa 100 g/l H₂SO₄, 350 g/l Na₂SO₄, und 17 g/l ZnSO₄ bei 58°C. Zur Erzielung einer entsprechenden Faserfestigkeit erfolgt eine Verstreckung im Zweitbad (92°C, 15 g/l H₂SO₄) von ca. 75%. Die Abzugsgeschwindigkeit beträgt 50 m/min.

Die erhaltenen Filamente werden in Stapel zu 40 mm geschnitten, mit Sauerwasser behandelt, entschwefelt, gewaschen und aviviert. Die Trocknung erfolgt bei 70°C.

Die erhaltenen Fasern haben einen Titer von 6,7 dtex, eine Trockenfestigkeit von 9,9 cN/tex bei einer Dehnung von 16,7 %. Die Gesamtkapazität der Fasern wurde mit 0,08 mequ/g Fasern bestimmt.

### Beispiel 6:

Das Ionenaustauscherharz Lewatit MP S 100 wird zu gleichen Gewichtsanteilen in Wasser dispergiert und mithilfe einer Kolloidmühle vorzerkleinert. Als Additive werden 0,1% Calgon N, 0,3% Lopon 890, 0,1% Deuteron VT819 und 0,3% Hydropalat 1080 zugegeben.

Es entsteht eine 24%ige Suspension, die mittels einer Perlmühle im Kreislaufbetrieb zu einer feinen Dispersion gemahlen wird. Die maximale Korngröße der Dispersion beträgt 7,8 µm,

Diese Dispersion wird mit einer 8,65%igen wässerigen Viskoselösung im Gewichtsverhältnis Dispersion:Viskose = 1:69 gemischt. Damit wird ein Harzanteil in der Faser von 3,8 Gew.% erreicht. Die Mischung wird aus Düsen mit einem Durchmesser von 80 mm in ein Spinnbad gesponnen. Das Spinnbad enthält etwa 100 g/l H₂SO₄, 350 g/l Na₂SO₄, und 17 g/l ZnSO₄ bei 48 °C. Zur Erzielung einer entsprechenden Faserfestigkeit erfolgt eine Verstreckung im Zweitbad (92°C, 15 g/l H₂SO₄) von 69%. Die Abzugsgeschwindigkeit beträgt 50 m/min.

Die daraus erhaltenen Filamente werden in Stapel zu 40 mm geschnitten, mit Sauerwasser behandelt, entschwefelt, nach Bedarf gebleicht, gewaschen und aviviert. Die Trocknung erfolgt bei 70°C.

Die Fasern haben einen Titer von 3,5 dtex, eine Trockenfestigkeit von 22,4 cN/tex bei einer Dehnung von 15,5 %. Die Gesamtkapazität der Fasern wurde gemäß DIN 54403 mit 0,34 mequ/g Fasern bestimmt.

Aufgrund der Regeneration in einem zinkhältigen Spinnbad weist die Faser eine Zinkkonzentration von 910 ppm Zn auf. Das gebundene Zink verstärkt die antibakterielle Wirkung. Bestimmt wurde eine bakteriostatische sowie bakterizide Wirksamkeit gegen *Staphylococcus aureus* und *Klebsiella pneumoniae* (JIS L 1902: Testing method for antibacterial of textiles, 1998).

### Beispiele 7 und 8

Es wurden gemäß dem in Beispiel 2 beschriebenen Verfahren die Ionenaustauscherharze Duolite C467 (schwach saurer Chelationenaustauscher mit Aminophosphonsäuregruppen in Na⁺-Form auf Polystyrolbasis, makroporös) und Amberlite GT73 (schwach saurer Kationenaustauscher mit Thiolgruppen in H⁺-Form auf Polystyrolbasis, makroporös, Größe der Ausgangsperlen: 0,45-0,7 mm) in Modalfasern inkorporiert. In der folgenden Tabelle sind die wichtigsten Ergebnisse zusammengefasst.

| | **Beispiel 7** | **Beispiel 8** |
|---|---|---|
| Eingesetztes Harz | Duolite C467 | Amberlite GT73 |
| Ionenaustauscheranteil in Faser | 30% | 24% |
| Maximale Korngröße | 3,00 µm | 5,22 µm |
| Titer der Faser | 3,45 dtex | 3,3 dtex |
| Faserfestigkeit | 9,8 cN/tex | 9,6 cN/tex |
| Faserdehnung | 15,3 % | 18,2 % |
| Austauschkapazität | 1,47 meq/g | 0,52 meq/g |

### Beispiel 9 (nicht ertindungsgemäß):

Das Ionentauscherharz Lewatit MP62 (Polystyrol, schwach basisch, tertiäres Amin, makroporös) wird zu gleichen Gewichtsanteilen in entionisiertem Wasser mittels Ultra-Turrax grob zerkleinert, und die resultierende Mischung mit Hilfe einer Perlmühle (Größe der Mahlkugeln: 1,1-1,4mm) zu einer Feindispersion mit einer maximalen Korngöße von 10,16µm und einem Feststoffgehalt von 20,9% gemahlen. Die Dispersion wurde in diesem Beispiel ohne den Einsatz von Dispergierhilfsmitteln hergestellt.

Die Dispersion wird mit einer 6%igen zur Herstellung von Modalfasern verwendeten Viskose im Gewichtsverhältnis von Dispersion:Viskose 1:3,5 gemischt. Die Mischung wird aus Düsen mit einem Durchmesser von 80µm in ein Spinnbad gesponnen. Das Spinnbad enthält etwa 80g/l H₂SO₄, 115g/l Na₂SO₄ und 60g/l ZnSO₄ bei 40°C. Zur Erzielung einer entsprechenden Faserfestigkeit erfolgt eine Verstreckung im Zweitbad (92°C, 15g/l H₂SO₄) von 82%. Die Abzugsgeschwindigkeit beträgt 25m/min.

Die daraus erhaltenen Filamente werden in Stapel von 40mm geschnitten, sauer nachgewaschen, entschwefelt, gebleicht, gewaschen und bei 60°C getrocknet.

Die Fasern haben einen Titer von 4,8 dtex und eine Trockenfestigkeit von 6,14cN/tex bei einer Dehnung von 35,6%. Die Gesamtkapazität der Fasern wurde gemäß DIN 54403 mit 2,0 mequ/g bestimmt und korrespondiert mit dem Harzanteil von 50% in der Faser.

### Beispiel 10 (Vergleichsbeispiel) :

Das Ionentauscherharz Lewatit MonoPlus S 100 (Polystyrol, stark sauer, Natriumsulfonat, makroporös) wird zu gleichen Gewichtsanteilen in entionisiertem Wasser mittels Ultra-Turrax grob zerkleinert, und die resultierende Mischung mit Hilfe einer Perlmühle (Größe der Mahlkugeln: 1,1-1,4mm) bis zu einer Korngöße von 26µm und einem Feststoffgehalt von 18,3% gemahlen. Um die Verspinnbarkeit zu verbessern, enthält die Dispersion 0,1% Calgon N und 0,3% Lopol 890.

Die Dispersion wird mit einer 6% zur Herstellung von Modalfasern verwendeten Viskose im Gewichtsverhältnis von Dispersion:Viskose 1:10 gemischt. Die Mischung wird aus Düsen mit einem Durchmesser von 80µm in ein Spinnbad gesponnen. Das Spinnbad enthält etwa 80g/l H₂SO₄, 115g/l Na₂SO₄ und 60g/l ZnSO₄ bei 40°C.

Innerhalb von 10 min beobachtet man dabei am Düsenfilter einen Druckanstieg von 10 bar, welcher die kontrollierte Herstellung einer Faser unmöglich macht.

### Beispiel 11:

Ausgehend von dem bereits beschriebenen Ionentauscherharz Lewatit MonoPlus S 100 wurden analog zu Beispiel 9 Fasern mit einem Harzanteil von 2,1% hergestellt und anschließend kurz mit einer Zinksulfatlösung (0,5 mol/l) bzw. einer Silbemitratlösung (0,5 mol/l) behandelt. Eine vollständige Ausnutzung der Kapazität wurde dabei nicht angestrebt.

Nach Auswaschen der überschüssigen Lösung mit entionisiertem Wasser und Trocknen der Fasern bei 60°C konnten bei den Fasern mittels ICP-Analyse Zink- bzw. Silberkonzentrationen von 3100 ppm bzw. 15000 ppm ermittelt werden. Beide Faserproben zeigen eine deutliche antibakterielle Wirksamkeit gegenüber Staphylococcus aureus und Klebsiella pneumoniae (JIS L1902).

## Patentansprüche

1. Verfahren zur Herstellung cellulosischer Formkörper nach dem Viskoseverfahren, welche Formkörper ein Material mit kationenaustauschenden Eigenschaften enthalten, wobei das Material mit kationenaustauschenden Eigenschaften der Spinnlösung und/oder einem Vorläufer davon zugegeben wird, **dadurch gekennzeichnet, dass** das Material funktionelle Gruppen, ausgewählt aus Sulfonsäure-, Carbonsäure-, Phosphonsäure, Aminophosphonsäure-, Iminodiessigsäure-, Thioharnstoff-, Thiol-, chelatbildenden und/oder amphoteren Gruppen, aufweist und in Form einer Dispersion von Partikeln mit einer maximalen Korngröße von 20 µm oder weniger zugegeben wird.

2. Verfahren gemäß Anspruch 1, **dadurch gekennzeichnet, dass** das Material in Form einer wässerigen Dispersion zugegeben wird.

3. Verfahren gemäß Anspruch 1 oder 2, **dadurch gekennzeichnet, dass** die Partikel eine maximale Korngröße von 7 µm oder weniger aufweisen.

4. Verfahren gemäß einem der vorhergehenden Ansprüche, **dadurch gekennzeichnet, dass** der das Material enthaltende Formkörper mit einem Metallion, bevorzugt ausgewählt aus der Gruppe, bestehend aus Silber-, Blei-, Kupfer-, Zink- und Quecksilberionen, behandelt wird.

5. Verfahren gemäß Anspruch 4, **dadurch gekennzeichnet, dass** man die funktionellen Gruppen des Materials zumindest teilweise vor dem Verspinnen und/oder im Regenerationsbad in die Zink-Form überführt.

6. Verfahren gemäß einem der vorhergehenden Ansprüche, **dadurch gekennzeichnet, dass** das Material eine Matrix, ausgewählt aus vernetztem Polystyrol oder Copolymeren aus Polystyrol und Methacrylsäure, Polyacrylat, Polyacrylamid, Phenol/Formaldehyd und/oder Cellulose, aufweist.

7. Verfahren gemäß einem der vorhergehenden Ansprüche, **dadurch gekennzeichnet, dass** das Material in einer Menge von 0,1 bis 100 Gew.%, bevorzugt 10 bis 70 Gew.%, besonders bevorzugt 10 bis 50 Gew.%, bezogen auf Cellulose und auf Basis der trockenen Aktivsubstanz, eingesetzt wird.

8. Verfahren gemäß einem der vorhergehenden Ansprüche, **dadurch gekennzeichnet, dass** die Dispersion eine Konzentration an Material mit kationenaustauschenden Eigenschaften von 1 % bis 60 Gew.%, bevorzugt 20 bis 50 Gew.% auf Basis der trockenen Aktivsubstanz aufweist.

9. Cellulosischer Formkörper, erhältlich durch ein Verfahren nach einem der vorhergehenden Ansprüche.

10. Cellulosischer Formkörper gemäß Anspruch 9 in Form einer Faser, einer Folie, eines Schwammes und/oder eines Partikels.

11. Fasermischung, enthaltend eine cellulosische Faser nach Anspruch 10.

12. Textiler Artikel, insbesondere Garn, Gewebe, Gestrick und/oder Vliesstoff, enthaltend eine cellulosische Faser gemäß Anspruch 10 oder eine Fasermischung gemäß Anspruch 11.

13. Verwendung des cellulosischen Formkörpers gemäß Anspruch 9 oder 10, der Fasermischung gemäß Anspruch 11 und/oder des textilen Artikels gemäß Anspruch 12 in Flüssigkeitsfiltern, zur Abwasserreinigung und zum Reinigen von Lösungen, zur Abscheidung von Schwermetallen, zur Entsalzung, in Luftfiltern mit antibakteriellen Eigenschaften, als antibakterielles Material, insbesondere als Ausgangsmaterial für medizinische Textilien, für analytische Zwecke, insbesondere als Substrat für präparative und katalytische Anwendungen in der Analytik, beispielsweise in einer chromatographischen Separierung, und/oder für Produkte mit antibakteriellen Eigenschaften, insbesondere für Unterwäsche, Sportbekleidung, Socken, Krankenhaustextilien, Bettwäsche, Haushaltstücher, Frotteewaren und Hygienevliesstoffe.

## Claims

1. A process for the production of cellulosic moulded bodies according to the viscose process, which moulded bodies contain a material having cation-exchange properties, wherein the material having cation-exchange properties is added to the spinning dope and/or to a precursor thereof, **characterized in that** the material has functional groups selected from sulfonic acid, carbonic acid, phosphonic acid, aminophosphonic acid, iminodiacetic acid, thiourea, thiol, chelate-forming and/or amphoteric groups and is added in the form of a dispersion of particles having a maximum grain size of 20 µm or less.

2. A process according to claim 1, **characterized in that** the material is added in the form of an aqueous dispersion.

3. A process according to claim 1 or 2, **characterized in that** the particles have a maximum grain size of 7 µm or less.

4. A process according to any of the preceding claims, **characterized in that** the moulded body containing the material is treated with a metal ion preferably selected from the group consisting of silver, lead, copper, zinc and mercury ions.

5. A process according to claim 4, **characterized in that** the functional groups of the material are converted at least partially into the zinc form prior to spinning and/or in the regeneration bath.

6. A process according to any of the preceding claims, **characterized in that** the material exhibits a matrix selected from cross-linked polystyrene or copolymers from polystyrene and methacrylic acid, polyacrylate, polyacrylamide, phenol/formaldehyde and/or cellulose.

7. A process according to any of the preceding claims, **characterized in that** the material is used in an amount of from 0.1 to 100% by weight, preferably from 10 to 70% by weight, particularly preferably from 10 to 50% by weight, based on cellulose and based on the dry active substance.

8. A process according to any of the preceding claims, **characterized in that** the dispersion exhibits a concentration of material having ion-exchange properties of from 1 to 60% by weight, preferably from 20 to 50% by weight, based on the dry active substance.

9. A cellulosic moulded body, obtainable by a process according to any of the preceding claims.

10. A cellulosic moulded body according to claim 9 in the form of a fibre, a film, a sponge and/or a particle.

11. A fibre mixture, comprising a cellulosic fibre according to claim 10.

12. A textile article, in particular a yarn, woven fabric, knitted fabric and/or non-woven fabric, comprising a cellulosic fibre according to claim 10 or a fibre mixture according to claim 11.

13. Use of the cellulosic moulded body according to claim 9 or 10, of the fibre mixture according to claim 11 and/or of the textile article according to claim 12 in liquid filters, for waste water purification and for the purification of solutions, for the separation of heavy metals, for desalination, in air filters having antibacterial properties, as an antibacterial material, in particular as a starting material for medical textiles, for analytical purposes, in particular as a substrate for preparative and catalytic applications in analytics, for example in a chromatographic separation, and/or for products having antibacterial properties, in particular for underwear, sportswear, socks, hospital textiles, bed linen, household cloths, terry cloth goods and sanitary non-woven fabrics.

## Revendications

1. Procédé de fabrication de corps cellulosiques façonnés par le procédé à la viscose, dans lequel
les corps façonnés contiennent un matériau à propriétés d'échange de cations et
le matériau à propriétés d'échange de cations est ajouté à la solution de filage ou à un précurseur de celle-ci,
**caractérisé en ce que**
le matériau contient des groupes fonctionnels sélectionnés parmi les groupes acide sulfonique, acide carboxylique, acide phosphonique, acide aminophosphonique, acide iminodiacétique, thiourée, thiol, les groupes chélatants et/ou amphotères, qui sont ajoutés sous la forme d'une dispersion de particules en grains d'une taille maximale de 20 µm ou moins.

2. Procédé selon la revendication 1, **caractérisé en ce que** le matériau est ajouté sous la forme d'une dispersion aqueuse.

3. Procédé selon les revendications 1 ou 2, **caractérisé en ce que** les particules ont une taille maximale de grain de 7 µm ou moins.

4. Procédé selon l'une des revendications précédentes, **caractérisé en ce que** le corps façonné contenant le matériau est traité avec un ion métallique, de préférence sélectionné dans l'ensemble constitué des ions d'argent, de plomb, de cuivre, de zinc et de mercure.

5. Procédé selon la revendication 4, **caractérisé en ce que** l'on transfère au moins une partie des groupes du matériau sous forme zinc avant le filage et/ou dans le bain de régénération.

6. Procédé selon l'une des revendications précédentes, **caractérisé en ce que** le matériau présente une matrice sélectionnée parmi le polystyrène réticulé, les copolymères de styrène et d'acide métacrylique, le polyacrylate, le polyacrylamide, le phénol-formaldéhyde et/ou la cellulose.

7. Procédé selon l'une des revendications précédentes, **caractérisé en ce que** le matériau est utilisé à raison de 0,1 à 100 % en poids, de préférence de 10 à 70 % en poids et de façon particulièrement préférable de 10 à 50 % en poids par rapport à la cellulose et sur base de la substance active sèche.

8. Procédé selon l'une des revendications précédentes, **caractérisé en ce que** la dispersion présente une concentration en matériau à propriétés d'échange de cations de 1 % à 60 % en poids et de préférence de 20 à 50 % en poids sur base de la surface active sèche.

9. Corps cellulosique façonné obtenu avec un procédé selon l'une des revendications précédentes.

10. Corps cellulosique façonné selon la revendication 9, qui présente la forme d'une fibre, d'une feuille, d'une éponge et/ou d'une particule.

11. Mélange de fibres contenant une fibre cellulosique selon la revendication 10.

12. Article textile et en particulier fil, tissu, tricot et/ou feutre contenant une fibre cellulosique selon la revendication 10 ou un mélange de fibres selon la revendication 11.

13. Utilisation du corps cellulosique façonné selon les revendications 9 ou 10, du mélange de fibres selon la revendication 11 et/ou de l'article textile selon la revendication 12 dans des filtres à liquide, pour l'épuration des eaux usées et pour l'épuration de solutions, pour le dépôt de métaux lourds, pour la désalinisation, dans des filtres à air à propriétés antibactériennes, comme matériau antibactérien, en particulier comme matériau de départ pour textiles médicaux, dans des applications d'analyse, en particulier comme substrat pour applications préparatives et catalytiques en analyse, par exemple dans une séparation chromatographique et/ou pour des produits à propriétés antibactériennes, en particulier pour des sous-vêtements, des vêtements de sport, des chaussettes, des textiles pour hôpital, du linge de lit, des serviettes domestiques, des chiffons et des feutres hygiéniques.
